# EUROPÄISCHE PATENTSCHRIFT

(11) **EP 1 943 128 B1**
(45) Veröffentlichungstag und Bekanntmachung des Hinweises auf die Patenterteilung: **30.01.2013**
(21) Anmeldenummer: 06805985.6
(22) Anmeldetag: 02.10.2006
(51) Int. Cl.: F16J 10/02, F15B 15/19, F15B 15/22, F16F 9/02, B60R 21/38

(54) **PYROTECHNISCHER AKTUATOR MIT ZYLINDER MIT KOMMUNIZIERENDEN KAMMERN**
PYROTECHNIC ACTUATOR WITH A CYLINDER HAVING COMMUNICATING CHAMBERS
DISPOSITIF D'ACTIONNEMENT PYROTECHNIQUE DOTE D'UN CYLINDRE DANS LEQUEL DES CHAMBRES COMMUNIQUENT

(30) Priorität: 28.10.2005 DE 102005051657
(43) Veröffentlichungstag der Anmeldung: 16.07.2008
(73) Patentinhaber: GM Global Technology Operations LLC, Detroit, MI 48265-3000 (US)
(72) Erfinder: SCHÄFER, Joachim, 64297 Darmstadt (DE); SCHEUCH, Volker, 63877 Sailauf (DE); SCHMIDT, Werner, 63755 Alzenau (DE); ZILG, Martin, 63741 Aschaffenburg/Nilkheim (DE)
(74) Vertreter: Strauss, Peter
(86) Internationale Anmeldenummer: PCT/EP2006/009540
(87) Internationale Veröffentlichungsnummer: WO 2007/048484

(56) Entgegenhaltungen:
- EP-A1- 0 779 448
- DE-A1- 10 116 717
- DE-A1- 10 305 685
- FR-A- 1 056 323
- GB-A- 2 175 375
- US-A- 2 892 452
- US-A- 5 303 631
- US-A1- 2005 000 766

## Beschreibung

Die vorliegende Erfindung betrifft einen pyrotechnischen Aktuator für eine aktive Haube eines Kraftfahrzeuges.

Unter einer aktiven Haube wird eine Haube verstanden, die bei einem Unfall durch einen oder mehrere Aktuatoren automatisch angehoben wird, um den Abstand zwischen der Haube und darunterliegenden, schwer verformbaren Teilen des Kraftfahrzeuges zu vergrößern und so einem eventuell auf die Haube aufschlagenden Fußgänger einen verlängerten Bremsweg zur Verfügung zu stellen. So soll vermieden werden, dass der Fußgänger mit einer Geschwindigkeit auf die nicht verformbaren Karosserieteile prallt, die zu lebensgefährlichen Verletzungen führen kann.

Es sind bereits diverse pyrotechnische Aktuatoren für diesen Zweck vorgeschlagen worden, die Gasgeneratoren, wie sie auch von Airbags bekannt sind, einsetzen, um die Haubenbewegung anzutreiben. Diese pyrotechnischen Aktuatoren haben eine vorteilhaft kurze Ansprechzeit, da sie im Allgemeinen elektrisch gezündet werden und daher zu ihrer Aktivierung nicht zeitaufwändig massive Teile beschleunigt werden müssen, und sie erzielen eine starke Beschleunigung der Haube, so dass diese ihre angehobene Stellung in kürzester Zeit erreicht. Nachteilig ist jedoch, dass die herkömmlichen pyrotechnischen Aktuatoren nicht reversierbar sind. Das heißt, sie taugen jeweils nur zum einmaligen Gebrauch und müssen anschließend ausgetauscht werden. Eine Fehlauslösung der Aktuatoren macht daher jedesmal einen kostspieligen Werkstattaufenthalt erforderlich. Da es schwerlich möglich ist, ein Auslösen der Aktuatoren bei einem Unfall zu vermeiden, falls die Haube vom Unfallgeschehen nicht betroffen ist, sind die Reparaturkosten eines mit pyrotechnischen Aktuatoren ausgestatteten Fahrzeuges nach einem Unfall in der Regel höher als die eines Fahrzeug, das diese Aktuatoren nicht aufweist.

Aus DE 103 08140 B3 ist ein reversierbarer Aktuator für eine Kraftfahrzeughaube bekannt, der mechanisch, durch Federkraft, angetrieben ist. Ein solcher Aktuator macht es scheinbar einfach, nach seiner Auslösung die Haube zurück in ihre Normalstellung zu bringen, aus der heraus eine erneute Auslösung erfolgten kann, doch muss die Feder wegen der sehr kurzen Aufstellzeiten stark dimensioniert sein, so dass ein Reversieren der Feder nur mit Hilfe eines Untersetzungsmechanismus möglich ist. Ein weiteres Problem ergibt sich aus der Tatsache, dass die gespannten Federn mit hoher Kraft gegen ein Hindernis drücken, welches bei Aktivierung des Aktuators blitzschnell entfernt werden muss. Ein hoher Druck der Feder gegen das Hindernis macht eine entsprechend hohe Antriebskraft zum Beseitigen des Hindernisses erforderlich, deren Aufbau die Stellbewegung des Aktuators stark verzögert.

Aus DE 103 05 685 A1 ist ein Aktuator zum Aufstellen einer aktiven Haube mit einem Zylinder und einem in dem Zylinder unter dem Einfluss eines Treibgases verschiebbaren Kolben bekannt, bei dem das den Kolben antreibende Treibgas von einer in dem Zylinder angeordneten Treibladung erzeugt wird. Die Haube ist in einer Normalstellung durch ein Verriegelungselement gehalten, um das zu lösen eine zweite Treibladung vorgesehen ist.

Ein weiteres Problem der herkömmlichen aktiven Hauben ist, dass die bekannten Aktuatoren zwar in der Lage sind, die Haube stark zu beschleunigen, dass die Haube aber, sobald die Aktuatoren ihren Anschlag erreichen, noch abrupter abgebremst wird, als sie zuvor beschleunigt wurde, und dadurch zu starken Schwingungen angeregt wird. Wenn ein Fußgänger auf einen Bereich der Haube zwischen zwei Aktuatoren aufschlägt, während dieser nach unten ausgelenkt ist, ist der Abstand zwischen diesem Bereich der Haube und darunter liegenden harten Teilen des Fahrzeuges stark verringert, und es besteht die Gefahr, dass der zum Abbremsen des Fußgängers zur Verfügung stehende Weg nicht ausreicht, um einen Aufprall auf diese harten Fahrzeugteile zu vermeiden.

US 2005/000766 A1 offenbart einen einstellbaren pyrotechnischen Stoßdämpfer, mit einem Zylinder und einem in dem Zylinder verschiebbaren Kolben sowie mit mehreren Gasgeneratoren. Der Stoßdämpfer treibt eine Aufstellbewegung der aktiven Haube nicht an, sondern wird von ihr mitgeschleppt. Indem im Laufe der Schleppbewegung nacheinander Gasgeneratoren gezündet werden, wird im Zylinder ein einstellbarer Gegendruck aufgebaut, der die Bewegung der Haube dämpft.

DE 103 432 106 A1 offenbart ein pyrotechnisch auslösbares Betätigungsorgan zum Entriegeln einer Haube. Es umfasst mehrere Treibladungen, die in zueinander benachbarten Zylindern angeordnet sind. Kolben dieser Zylinder wirken auf einen sich zwischen den Zylindern erstreckenden Auslösestößel, der seinerseits, wenn er von einem vorrückenden Kolben mitgenommen wird, das Haubenschloss entriegelt.

Eine erste Aufgabe der vorliegenden Erfindung ist, einen Aktuator für eine aktive Haube anzugeben, der geeignet ist, mehrere Aufstellbewegungen der Haube anzutreiben, ohne jeweils nach einer dieser Aufstellbewegungen einen Werkstattaufenthalt erforderlich zu machen, und dabei eine Kraft auf die Haube auszuüben, die es erlaubt, den Aufprall eines Fußgängers abzufangen.

Diese Aufgabe wird gelöst durch einen pyrotechnischen Aktuator mit einem Zylinder, einem in dem Zylinder unter dem Einfluss eines Treibgases zum Antreiben einer Aufstellbewegung der Haube verschiebbaren Kolben, einem ersten Gasgenerator zum Erzeugen des Treibgases und wenigstens einem weiteren Gasgenerator, der unabhängig von dem ersten Gasgenerator zündbar ist, um den Zylinder mit Gas zum Antreiben einer weiteren Aufstellbewegung zu versorgen und dadurch daß ein Gasgenerator Trägerkammern für die Gasgeneratoren aufweist, die mit einer Gaseinlassöffnung des Zylinders verbunden sind.

Vorzugweise verfügt der Aktuator ferner über eine elektronische Zündschaltung, die auf externe Zündbefehle hin die Gasgeneratoren jeweils einzeln und der Reihe nach zündet.

Vorzugsweise hat der Zylinder zwei Kammern beiderseits des Kolbens, die mit Treibgas von dem gezündeten Gasgenerator beschickbar sind. Wenn in einer Normalstellung des Aktuators die erste dieser Kammern deutlich kleiner ist als die zweite, genügt eine kleine in die erste Kammer eingespeiste Gasmenge, um in dieser einen hohen Druck aufzubauen, der die Bewegung des Kolbens antreibt. Diese Bewegung verkleinert zwangsläufig fortschreitend das Volumen der zweiten Kammer, so dass ein sich in dieser zweiten Kammer aufbauender Gegendruck die Bewegung des Kolbens und mit dieser die Bewegung einer von dem Aktuator angetriebenen Haube allmählich abbremst. Ein hartes Anschlagen des Kolbens am Ende von dessen Verstellweg, das starke Schwingungen der Haube anregen würde, wird so vermieden.

Um einen unnötig frühen Aufbau eines Gegendrucks in der zweiten Kammer zu vermeiden, ist die zweite Kammer vorzugsweise nach der ersten mit dem Treibgas beschickbar. Eine solche Reihenfolge ist auf einfache Weise konstruktiv sicherzustellen, indem die zweite Kammer mit dem Treibgas durch die erste Kammer hindurch beschickbar ist. Bei einer solchen Anordnung empfängt die zweite Kammer erst dann in nennenswertem Umfang Treibgas, wenn dieses einen ausreichenden Druck in der ersten Kammer aufgebaut hat, um von dort in die zweite vorzudringen.

Um die Versorgung der zweiten Kammer mit Treibgas zu verzögern, ist vorzugsweise ein Einlassdurchgang für Treibgas in die zweite Kammer in einer Ruhestellung des Kolbens versperrt und nur dann offen, wenn der Kolben aus der Ruhestellung ausgelenkt ist.

Um eine wirksame Abstützung der Haube im angehobenen Zustand durch den in der ersten Kammer des Aktuators herrschenden Gasdruck zu gewährleisten, sollte der Einlassdurchgang zweckmäßigerweise auch versperrt sein, wenn sich der Kolben in einer der Ruhestellung entgegengesetzten Endstellung befindet.

Ein gedrosselter Übertritt von Treibgas von der ersten Kammer in die zweite ist auf einfache Weise realisierbar, wenn die lichte Weite des Zylinders in einem mittleren Bereich des Zylinders größer ist als in wenigstens einem seiner Endbereiche.

Wenn ein Fußgänger auf die Haube aufschlägt, so wird dies im Allgemeinen zu einem Zurückweichen des Aktuatorkolbens führen, bei dem Arbeit gegen den Druck des Treibgases in der ersten Kammer verrichtet wird, wodurch der Fußgänger abgebremst wird. Um den Druck des Treibgases in der ersten Kammer während dieser Abwärtsbewegung lange zu halten, umfasst der Kolben zweckmäßigerweise ein mit einer Kolbenstange verbundenes Mittelstück und eine das Mittelstück umgebende und an diesem axial verschiebbare Schürze.

Die axiale Verschiebbarkeit der Schürze gegen das Mittelstück sollte in beide Richtungen durch Anschläge begrenzt sein, um sicherzustellen, dass die Schürze einer Bewegung des Mittelstücks folgt.

Um den Gasübertritt in die zweite Kammer während der Aufwärtsbewegung der Haube zu erleichtern, kann die Schürze mit lokalen Durchbrüchen versehen sein.

Der Abstand der Durchbrüche von einem Ende der Schürze ist vorzugsweise größer als die Länge des mittleren Bereiches, um sicherzustellen, dass ein Übertritt von Treibgas von der ersten Kammer in die zweite im Wesentlichen nur während einer Aufwärtsbewegung der Haube, nicht aber während einer Abwärtsbewegung stattfindet.

Eine Drosselstelle, über die die zweite Kammer mit der Umgebung kommuniziert, verhindert, dass sich in der zweiten Kammer ein die Kolbenbewegung abbremsender Gegendruck früher als nötig aufbaut.

Gegenstand der Erfindung ist auch ein Kraftfahrzeug mit einer aktiven Haube, die an einem Rahmen des Kraftfahrzeuges über Aktuatoren der oben definierten Art gehalten ist. Da die Aktuatoren selber jeweils bei einem Aufprall nachgeben können, kann eine von ihnen gehaltene Haube auf ihrer gesamten Oberfläche nachgiebig sein, so dass ein Fußgänger wirksam geschützt ist, egal, an welchem Ort der Haube er aufschlägt.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein Kraftfahrzeug mit einer von Aktuatoren in einer angehobenen Stellung gehaltenen Haube;
- Fig. 2: eine perspektivische auseinandergezogene Ansicht eines Aktuators gemäß der Erfindung;
- Fig. 3: einen schematischen Schnitt durch einen Aktuatorzylinder gemäß der vorliegenden Erfindung in Normalstellung;
- Fig. 4: den Aktuatorzylinder aus Fig. 3 mit angehobenem Kolben;
- Fig. 5: einen schematischen Schnitt durch einen Aktuatorzylinder gemäß einer zweiten Ausgestaltung der Erfindung in Normalstellung;
- Fig. 6: den Aktuatorzylinder während des Anhebens der Haube;
- Fig. 7: den Aktuatorzylinder bei maximal angehobener Haube;
- Fig. 8: den Aktuatorzylinder zu einem ersten Zeitpunkt während einer Abwärtsbewegung der Haube, angetrieben durch den Aufschlag eines Fußgängers; und
- Fig. 9: einen Schnitt durch den Aktuatorzylinder zu einem zweiten, späteren Zeitpunkt der Abwärtsbewegung.

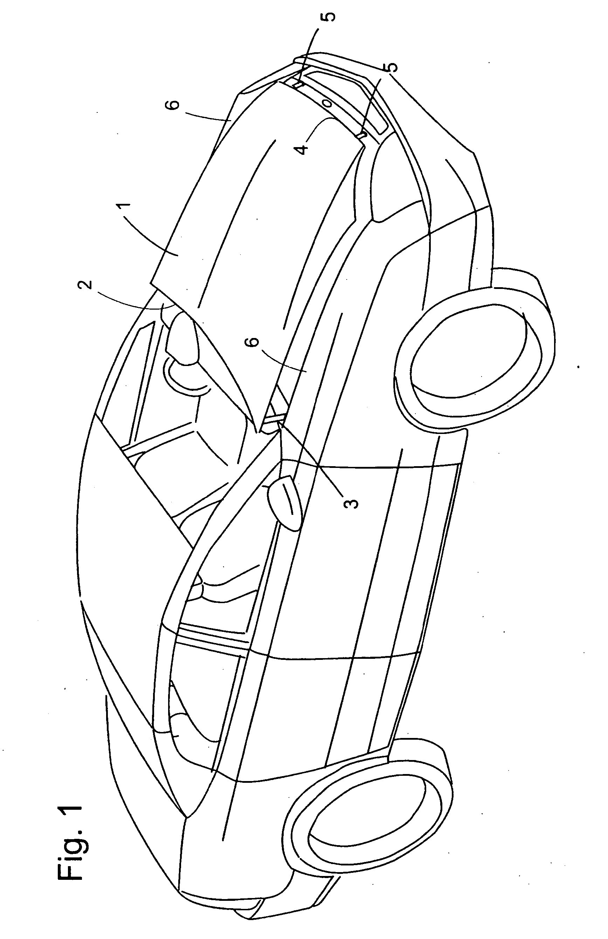

Fig. 1 zeigt schematisch ein Kraftfahrzeug mit einer Motorhaube 1, die durch benachbart zum vorderen bzw. hinteren Rand der Haube 4, 2 angeordnete Aktuatoren 5, 3 in einer gegenüber einer Normalstellung, in der sie mit benachbarten Karosserieteilen 6 bündig ist, angehobenen Stellung gehalten ist. Die Haube 1 ist ausschließlich durch die Aktuatoren 3, 5 unterstützt.

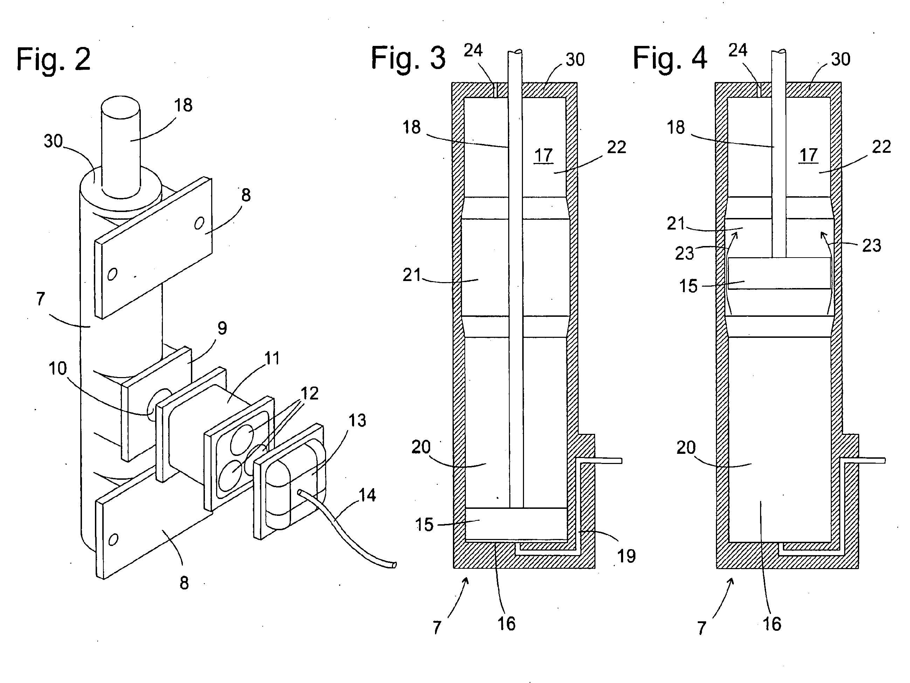

Fig. 2 zeigt eine perspektivische auseinandergezogene Ansicht eines dieser Aktuatoren 3, 5. Er umfasst einen langgestreckten Zylinder 7, der zwei Befestigungsflansche 8 zur Montage des Zylinders 7 an einem starren Rahmen des Kraftfahrzeuges trägt. Zwischen den Befestigungsflanschen 8 ist ein Gaseinlassflansch 9 mit Einlassöffnung 10 angeordnet. Ein Gasgeneratorträger 11 ist vorgesehen, um gasdicht an dem Einlassflansch 9 befestigt zu werden. Der Gasgeneratorträger 11 weist Kammern für drei Gasgeneratoren 12 auf, die mit der Einlassöffnung 10 verbunden sind. In einem Durchgang zwischen jeder Kammer und der Einlassöffnung 10 kann jeweils eine in der Figur nicht gezeigte zerstörbare Trennwand in dem Gasgeneratorträger 11 angebracht sein, die aufreißt, wenn der Gasgenerator 12 in der ihr zugeordneten Kammer gezündet wird, die aber einen in der ihr zugeordneten Kammer untergebrachten Gasgenerator 12 davor schützt, durch die Explosion eines Gasgenerators 12 in einer benachbarten Kammer mitgezündet zu werden.

Ein an der vom Zylinder 7 abgewandten Seite des Gasgeneratorträgers 11 zu montierender Deckel 13 enthält eine elektronische Zündschaltung, die jeweils bei Empfang eines Zündbefehls über ein Signalkabel 14 einen der Gasgeneratoren 12 zündet.

Der Aktuator der Fig. 2 ist somit in der Lage, drei Aufstellbewegungen der Haube 1 anzutreiben, bevor er verbraucht ist und ausgetauscht werden muss.

Es liegt auf der Hand, dass auch mehr oder weniger als drei Gasgeneratoren 12 in dem Gasgeneratorträger 11 untergebracht sein können. Die Zahl der Gasgeneratoren wird im Allgemeinen jedoch nicht größer sein als fünf oder sechs, da die Zahl der zu erwartenden Haubenaufstellbewegungen während der Lebensdauer eines Kraftfahrzeuges beschränkt ist.

Ein Gasgeneratorträger mit einem einzigen Gasgenerator müsste jedes Mal nach einer Aufstellung der Haube 1 ausgetauscht werden, während der Zylinder selber im Fahrzeug verbleiben könnte. Ein solcher Austausch wäre nach jeder Aufstellung der Haube 1 erforderlich und würde erhebliche Sicherheitsvorkehrungen erfordern, die in einer Kfz-Werkstatt nur schwierig zu gewährleisten sind. Daher ist dieser Fall nicht erfindungsgemäß.

Fig. 3 zeigt einen schematischen Schnitt durch den Zylinder 7 des Aktuators gemäß einer ersten Ausgestaltung der Erfindung im Normalzustand. Ein verschiebbarer Kolben 15 teilt das Innere des Zylinders 7 in zwei Kammern, eine untere Kammer 16, deren Volumen in der gezeigten Normalstellung minimal ist, und eine obere Kammer 17, die fast das gesamte Innere des Zylinders 7 einnimmt und durch die hindurch sich eine Kolbenstange 18 erstreckt, an deren nicht gezeigtem oberen Ende die Haube 1 befestigt ist. Eine Gasleitung 19 erstreckt sich von der Einlassöffnung 10 in die untere Kammer 16.

Die Wand des Zylinders 7 ist in Längsrichtung in drei Abschnitte 20, 21, 22 gegliedert. Der Querschnitt des unteren Abschnittes 20 und des oberen Abschnittes 22 entspricht dem des Kolbens 15, so dass dieser in diesen Abschnitten im Wesentlichen dicht an der Zylinderwand anliegt. In dem mittleren Abschnitt 21 ist die lichte Weite des Zylinders geringfügig größer als in den Abschnitten 20, 22, so dass, wenn der Kolben 15 durch in die Kammer 16 über die Gasleitung 19 einströmendes Treibgas bis in den Abschnitt 21 angehoben worden ist, ein Teil des Treibgases an dem Kolben 15 vorbei in die obere Kammer 17 strömen kann, wie durch Pfeile 23 angedeutet. Wenn der Kolben 15 im Laufe seiner weiteren Aufwärtsbewegung den oberen Abschnitt 22 erreicht, schließt er wieder dicht an der Zylinderwand an, und das Gas in der oberen Kammer 22 wird komprimiert. Der daraus resultierende Gegendruck bremst den Kolben 15 und mit ihm die Haube 1 kontinuierlich ab, so dass der Kolben 15 nicht oder allenfalls sacht an die obere Wand des Zylinders 7 anschlägt.

In dieser oberen Wand ist ein Drosseldurchgang 24 dargestellt, durch den in der Kammer 17 komprimiertes Gas ins Freie entweichen kann. Der freie Durchgangsquerschnitt zwischen Kolben 15 und Zylinderwand im Abschnitt 21 und der Durchgangsquerschnitt des Drosseldurchgangs 24 sind zweckmäßigerweise so aneinander angepasst, dass der Gegendruck in der Kammer 17 die Aufwärtsbewegung des Kolbens zum Stehen bringt, unmittelbar bevor dieser an die obere Wand des Zylinders 7 stößt. Der Drosseldurchgang 24, der hier als eine von der Kolbenstange '18 beabstandete Öffnung in der oberen Wand des Zylinders dargestellt ist, kann natürlich auch durch einen Spalt zwischen der Kolbenstange 18 und der sie umgebenden oberen Wand des Zylinders gebildet sein.

In Figur 3 und 4 ist der mittlere Abschnitt 21 zylindrisch, mit einem gegenüber den Abschnitten 20, 22 geringfügig vergrößertem Durchmesser dargestellt. Selbstverständlich könnte die lichte Weite im Abschnitt 21 auch nur auf einem Teil von dessen Umfang vergrößert sein, zum Beispiel durch ein oder mehrere sich in Richtung der Hohlachse des Zylinders 7 über die Länge des Abschnittes 21 erstreckende Rillen, zwischen denen sich mit den Abschnitten 20, 22 bündige, den Kolben 15 auch in dem mittleren Abschnitt 21 exakt führende Wandabschnitte erstrecken.

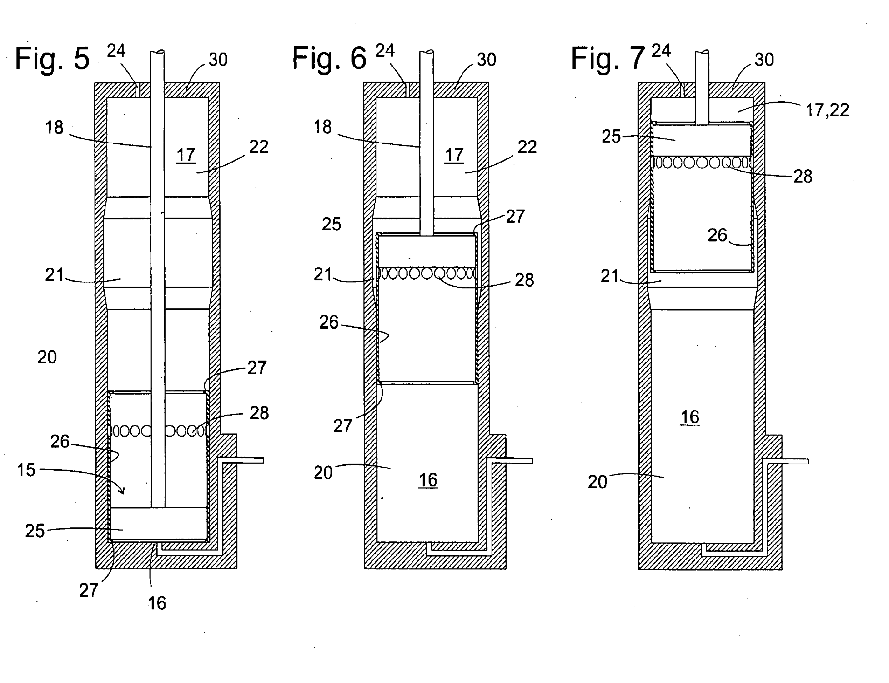

Eine weiterentwickelte Ausgestaltung des Aktuators wird anhand der Figuren 5 bis 9 erläutert. Der Zylinder 7 ist im Wesentlichen der gleiche wie bei der zuvor betrachteten Ausgestaltung. Der Kolben 15 ist unterteilt in ein mit der Kolbenstange 18 fest verbundenes, flachzylindrisches Mittelstück 25 und eine das Mittelstück 25 umgebende Hülse 26. Die Hülse 26 weist an ihrem oberen und unteren Ende jeweils einen einwärts gerichteten umlaufenden Steg 27 auf, der einen Anschlag für das Mittelstück 25 bildet. In einer Entfernung vom oberen Rand der Hülse 26, die nicht größer ist als die Dicke des Mittelstücks 25, ist eine Mehrzahl von Durchbrüchen 28 gebildet. Ein von Durchbrüchen freier unterer Abschnitt 29 der Hülse 26 ist mindestens so lang wie der mittlere Abschnitt 21 des Zylinders 7.

Wenn durch über die Gasleitung 19 zuströmendes Treibgas das Mittelstück 25 des Kolbens aus der in Fig. 5 gezeigten Normalstellung herausgetrieben wird, steigt es zunächst innerhalb der Hülse 26 an, die trägheitsbedingt in Ruhe bleibt. Erst wenn das Mittelstück 25 an den oberen Steg 27 anschlägt, wird die Hülse 26 mitgerissen, und der Kolben 15 erreicht die in Fig. 6 dargestellte Stellung, in welcher ein Durchtritt von Gas aus der unteren Kammer 16 in die obere Kammer 17 über die Durchbrüche 28 stattfindet.

Im Laufe der weiteren Aufwärtsbewegung des Kolbens, wie in Fig. 7 gezeigt, wird dieser durch sich der oberen Kammer 17 aufbauenden Gasdruck allmählich abgebremst. In der Stellung, in der der Kolben zur Ruhe kommt, haben die Durchbrüche den Abschnitt 21 passiert, so dass kein weiteres Gas durch sie hindurch treten kann.

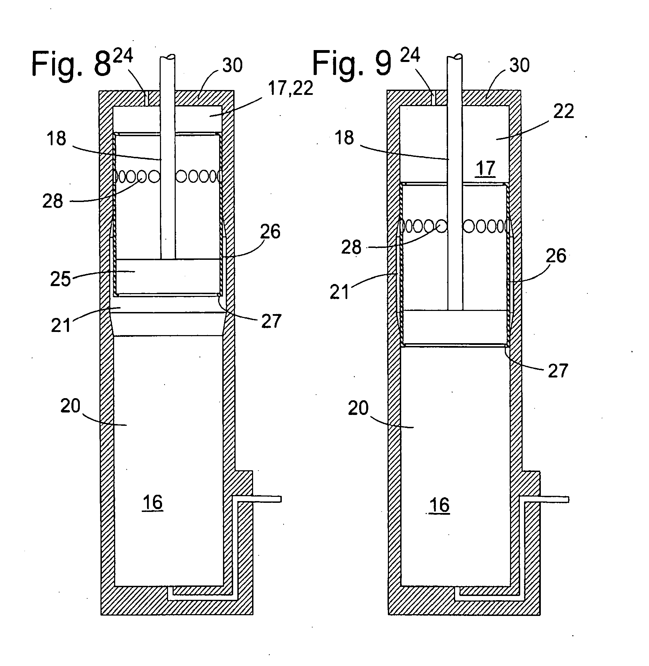

Wenn anschließend unter dem Druck eines aufschlagenden Fußgängers eine Abwärtsbewegung der Haube einsetzt, bewegt sich zunächst nur das Mittelstück 25; die Hülse 26 folgt erst, sobald das Mittelstück 25 den unteren Steg 27 der Hülse 26 erreicht hat, wie in Fig. 8 gezeigt. Das Mittelstück 25 befindet sich nun zwar in dem Abschnitt 21 des Zylinders 7, da aber die Durchbrüche 28 im Abschnitt 22 zurückgeblieben sind, kann Treibgas nicht in nennenswertem Umfang von der unteren Kammer 16 in die obere 17 übertreten, so dass zum Hinunterdrängen des Kolbens Arbeit zu leisten ist, die der Aufprallenergie des Fußgängers entzogen wird.

Fig. 9 zeigt dasjenige Stadium der Abwärtsbewegung des Kolbens, in welchem die Durchbrüche 28 den mittleren Abschnitt 21 des Zylinders erreichen. Zu diesem Zeitpunkt haben das Mittelstück 25 und der untere Rand der Hülse 26 bereits den Abschnitt 20 erreicht, so dass auch hier kein Gas in die obere Kammer 17 überströmen kann. So wird der Fußgänger über den gesamten Hub des Kolbens 15 hinweg wirksam abgebremst und optimal geschützt.

### Bezugszeichenliste

- Motorhaube: 1
- Rand: 2
- Aktuator: 3
- Rand: 4
- Aktuator: 5
- Karosserieteil: 6
- Zylinder: 7
- Befestigungsflansch: 8
- Gaseinlassflansch: 9
- Einlassöffnung: 10
- Gasgeneratorträger: 11
- Gasgenerator: 12
- Deckel: 13
- Signalkabel: 14
- Kolben: 15
- untere Kammer: 16
- obere Kammer: 17
- Kolbenstange: 18
- Gasleitung: 19
- Abschnitt: 20, 21, 22
- Pfeil: 23
- Drosseldurchgang: 24
- Mittelstück: 25
- Hülse: 26
- Steg: 27
- Durchbruch: 28
- Abschnitt: 29
- obere Wand: 30

## Patentansprüche

1. Kraftfahrzeug mit aktiver Haube und einem pyrotechnischen Aktuator (3, 5), der einen Zylinder (7), einen in dem Zylinder (7) unter dem Einfluss eines Treibgases zum Antreiben einer Aufstellbewegung der Haube verschiebbaren Kolben (15), einen ersten Gasgenerator (12) zum Erzeugen des Treibgases, und wenigstens einen weiteren Gasgenerator (12) umfasst, der unabhängig von dem ersten Gasgenerator (12) zündbar ist, um eine weitere Aufstellbewegung anzutreiben, **dadurch gekennzeichnet, dass** ein Gasgeneratorträger (11) Kammern für die Gasgeneratoren (12) aufweist, die mit einer Gaseinlassöffnung (10) des Zylinders (7) verbunden sind.

2. Kraftfahrzeug nach Anspruch 1, **gekennzeichnet durch** eine elektronische Zündschaltung, die auf externe Zündbefehle die Gasgeneratoren (12) einzeln und der Reihe nach zündet.

3. Kraftfahrzeug nach einem der vorhergehenden Ansprüche, **dadurch gekennzeichnet, dass** der Zylinder (7) zwei Kammern (16, 17) beiderseits des Kolbens (15) hat, die mit Treibgas von dem Gasgenerator (12) beschickbar sind.

4. Kraftfahrzeug nach Anspruch 3, **dadurch gekennzeichnet, dass** die zweite Kammer (17) nach der ersten (16) mit dem Treibgas beschickbar ist.

5. Kraftfahrzeug nach Anspruch 3 oder 4, **dadurch gekennzeichnet, dass** die zweite Kammer (17) mit dem Treibgas durch die erste Kammer (16) hindurch beschickbar ist.

6. Kraftfahrzeug nach Anspruch 3, 4 oder 5, **dadurch gekennzeichnet, dass** ein Einlassdurchgang für Treibgas in die zweite Kammer (17) in einer Ruhestellung des Kolbens (15) versperrt ist und offen ist, wenn der Kolben (15) aus der Ruhestellung ausgelenkt ist.

7. Kraftfahrzeug nach Anspruch 6, **dadurch gekennzeichnet, dass** der Einlassdurchgang versperrt ist, wenn sich der Kolben (15) in einer der Ruhestellung entgegengesetzten Endstellung befindet.

8. Kraftfahrzeug nach einem der Ansprüche 4 bis 7, **dadurch gekennzeichnet, dass** die lichte Weite des Zylinders (7) in einem mittleren Bereich (21) des Zylinders (7) größer ist als in wenigstens einem seiner Endbereiche (20, 22).

9. Kraftfahrzeug nach einem der Ansprüche 4 bis 8, **dadurch gekennzeichnet, dass** der Kolben (15) ein mit einer Kolbenstange (18) verbundenes Mittelstück (25) und eine das Mittelstück (25) umgebende und an diesem axial verschiebbare Schürze (26) umfasst.

10. Kraftfahrzeug nach Anspruch 9, **dadurch gekennzeichnet, dass** die axiale Verschiebbarkeit der Schürze (26) gegen das Mittelstück (25) in beide Richtungen durch Anschläge begrenzt ist.

11. Kraftfahrzeug nach Anspruch 9 oder 10, **dadurch gekennzeichnet, dass** die Schürze (26) lokale Durchbrüche (28) aufweist.

12. Kraftfahrzeug nach Anspruch 11, **dadurch gekennzeichnet, dass** der Abstand der Durchbrüche (28) von einem Ende der Schürze (26) größer ist als die Länge des mittleren Bereichs (21).

13. Kraftfahrzeug nach einem der Ansprüche 3 bis 12, **dadurch gekennzeichnet, dass** die zweite Kammer (17) über eine Drosselstelle (24) mit der Umgebung kommuniziert.

## Claims

1. A motor vehicle, comprising an active hood and a pyrotechnic actuator (3, 5) which comprises a cylinder (7), a piston (15) which is displaceable in the cylinder (7) under the influence of a propellant for driving an upward righting movement of the hood, a first gas generator (12) for generating a propellant, and at least one further gas generator (12) which is ignitable independently from the first gas generator (12) in order to drive a further upward righting movement, **characterized in that** a gas generator support (11) comprises chambers for the gas generators (12) which are connected with a gas inlet opening (10) of the cylinder (7).

2. A motor vehicle according to claim 1, **characterized by** an electronic ignition circuit which ignites the gas generators (12) individually and successively after external ignition commands.

3. A motor vehicle according to one of the preceding claims, **characterized in that** the cylinder (7) comprises two chambers (16, 17) on either side of the piston (15), which chambers (16, 17) can be supplied with propellant from the gas generator (12).

4. A motor vehicle according to claim 3, **characterized in that** the second chamber (17) can be supplied with the propellant after the first one (16).

5. A motor vehicle according to claim 3 or 4, **characterized in that** the second chamber (17) can be supplied with the propellant through the first chamber (16).

6. A motor vehicle according to claim 3, 4 or 5, **characterized in that** an inlet passage for the propellant into the second chamber (17) is blocked in an idle position of the piston (15) and is open when the piston (15) has been deflected from the idle position.

7. A motor vehicle according to claim 6, **characterized in that** the inlet passage is blocked when the piston (15) is in an end position opposite of the idle position.

8. A motor vehicle according to one of the claims 4 to 7, **characterized in that** the clearance of the cylinder (7) is larger in a middle region (21) of the cylinder (7) than in at least one of its end regions (20, 22).

9. A motor vehicle according to one of the claims 4 to 8, **characterized in that** the piston (15) comprises a middle section (25) connected to a piston rod (18) and an apron (26) which encloses the middle section (25) and is axially displaceable thereon.

10. A motor vehicle according to claim 9, **characterized in that** the axial displaceability of the apron (26) relative to the middle section (25) is limited in both directions by stops.

11. A motor vehicle according to claim 9 or 10, **characterized in that** the apron (26) comprises local breakthroughs (28).

12. A motor vehicle according to claim 11, **characterized in that** the distance of the breakthroughs (28) from one end of the apron (26) is larger than the length of the middle region (21).

13. A motor vehicle according to one of the claims 3 to 12, **characterized in that** the second chamber (17) communicates with the ambient environment via a throttling point (24).

## Revendications

1. Véhicule à moteur avec un capot actif et un actionneur pyrotechnique (3, 5) comprenant un cylindre (7), un piston (15) déplaçable dans le cylindre (7) sous l'action d'un gaz propulseur pour entraîner un mouvement de levage du capot, un premier générateur de gaz (12) pour la production du gaz propulseur et au moins un autre générateur de gaz (12) qui peut être allumé indépendamment du premier générateur de gaz (12) pour entraîner un autre mouvement de levage, **caractérisé en ce qu'**un support de générateurs de gaz (11) présente des compartiments pour les générateurs de gaz (12) qui sont reliés à une ouverture d'entrée de gaz (10) du cylindre (7).

2. Véhicule à moteur selon la revendication 1, **caractérisé en ce qu'**il comporte un circuit d'allumage électronique qui allume les générateurs de gaz (12) séparément et successivement en présence d'ordres d'allumage externes.

3. Véhicule à moteur selon l'une des revendications précédentes, **caractérisé en ce que** le cylindre (7) possède de part et d'autre du piston (15) deux chambres (16, 17) qui peuvent être remplies avec du gaz propulseur provenant du générateur de gaz (12).

4. Véhicule à moteur selon la revendication 3, **caractérisé en ce que** la deuxième chambre (17) peut être remplie du gaz propulseur après la première (16).

5. Véhicule à moteur selon la revendication 3 ou 4, **caractérisé en ce que** la deuxième chambre (17) peut être remplie du gaz propulseur à travers la première chambre (16).

6. Véhicule à moteur selon la revendication 3, 4 ou 5, **caractérisé en ce qu'**un passage d'entrée du gaz propulseur dans la deuxième chambre (17) est fermé dans une position de repos du piston (15) et ouvert quand le piston (15) est dévié de la position de repos.

7. Véhicule à moteur selon la revendication 6, **caractérisé en ce que** le passage d'entrée est fermé quand le piston (15) se trouve dans une position de fin de course opposée à la position de repos.

8. Véhicule à moteur selon l'une des revendications 4 à 7, **caractérisé en ce que** la largeur libre du cylindre (7) dans une partie centrale (21) du cylindre (7) est plus grande que dans au moins une de ses parties d'extrémité (20, 22).

9. Véhicule à moteur selon l'une des revendications 4 à 8, **caractérisé en ce que** le piston (15) comprend une pièce intermédiaire (25) reliée à une tige de piston (18) et une jupe (26) entourant la pièce intermédiaire (25) et déplaçable dans le sens axial sur celle-ci.

10. Véhicule à moteur selon la revendication 9, **caractérisé en ce que** la mobilité axiale de la jupe (26) contre la pièce intermédiaire (25) est limitée dans les deux sens par des butées.

11. Véhicule à moteur selon la revendication 9 ou 10, **caractérisé en ce que** la jupe (26) présente des ouvertures locales (28).

12. Véhicule à moteur selon la revendication 11, **caractérisé en ce que** l'écart entre les ouvertures (28) d'une extrémité de la jupe (26) est plus grand que la longueur de la partie centrale (21).

13. Véhicule à moteur selon l'une des revendications 3 à 12, **caractérisé en ce que** la deuxième chambre (17) communique avec l'environnement par l'intermédiaire d'un point d'étranglement (24).
